# EUROPÄISCHE PATENTANMELDUNG

(11) **EP 1 495 906 A2**
(43) Veröffentlichungstag der Anmeldung: **12.01.2005**
(21) Anmeldenummer: 04015603.6
(22) Anmeldetag: 02.07.2004
(51) Int. Cl.: B60L 11/18

(54) **Industrieschlepper mit elektrischem Fahrantrieb**

(30) Priorität: 08.07.2003 DE 10330814
(71) Anmelder: STILL GMBH, D-22113 Hamburg (DE)
(72) Erfinder: Kubusch, Dietmar, 21244 Buchholz (DE); Leifert, Torsten, Dr., 21360 Vögelsen (DE)
(74) Vertreter: Lang, Michael (DE)

(57) **Zusammenfassung**

Die Erfindung betrifft einen Industrieschlepper (1) mit elektrischem Fahrantrieb. Zur Energieversorgung des elektrischen Fahrantriebes wird mindestens eine Brennstoffzelleneinheit (9) verwendet.

## Beschreibung

Die Erfindung betrifft einen Industrieschlepper mit elektrischem Fahrantrieb. Industrieschlepper sind Flurförderzeuge ohne Lasthebevorrichtung für den innerbetrieblichen Warentransport. Dazu werden an den Schlepper über eine Anhängevorrichtung ein oder mehrere Transportwagen angehängt, die die zu befördernden Waren tragen. Die Fahrzeuge können auch mit einer eigenen Lasttrageplattform ausgestattet sein und so zum Transport kleinerer Lasten geeignet sein. Derartige Fahrzeuge werden von der STILL GmbH unter den Bezeichungen R06, R07 und R08 hergestellt und vertrieben. Im Gegensatz zu Flurförderzeugen mit Lasthebevorrichtung, wie beispielsweise Gabelstaplern, die selten zur Beförderung großer Mengen von Lasten sowohl in Gebäuden wie auch im Freien über längere Distanzen, beispielsweise durch weitläufige Industrieanlagen, eingesetzt werden, legen Industrieschlepper häufig längere Strecken zurück, die sowohl innerhalb als auch außerhalb geschlossener Räume verlaufen. Um einen emissionsfreien Betrieb in Gebäuden zu ermöglichen, wird zumeist ein Elektroantrieb verwendet. Die Reichweite von batteriegetriebenen Fahrzeugen ist im Vergleich zu einem verbrennungsmotorischen Antrieb jedoch relativ gering und durch die langen Nachladezeiten für die Batterien mit großen Stillstandszeiten verbunden. Bei Fahrzeugen, die sowohl im Freien wie in Gebäuden verwendet werden, ist deshalb auch ein Hybridantrieb gebräuchlich, bei dem zusätzlich zu einer Batterie noch ein Verbrennungsmotor vorhanden ist. Dadurch kann zwar die Stillstandszeit verringert werden, da die Betankung relativ schnell erfolgt, doch ist der Antrieb durch die beiden verschiedenen Energiequellen relativ aufwändig und schwer, was zu erhöhtem Herstellungsaufwand und bei Fahrzeugen mit eigener Lasttrageplattform zu einer Reduzierung der Nutzlast führt. Der Erfindung liegt daher die Aufgabe zugrunde, einen Industrieschlepper mit elektrischem Fahrantrieb zu schaffen, der über eine lange Betriebsdauer verfügt und zum Betrieb in Innenräumen geeignet ist.

Diese Aufgabe wird erfindungsgemäß dadurch gelöst, dass zur Energieversorgung des elektrischen Fahrantriebes mindestens eine Brennstoffzelleneinheit verwendet wird. Brennstoffzellensysteme erzeugen praktisch keine schädlichen Emissionen und sind daher für den Einsatz in Innenräumen sehr gut geeignet. Gleichzeitig bieten sie durch einen hohen Wirkungsgrad bei der Ausnutzung der Energie des Brennstoffs eine lange Betriebsdauer und damit eine große Reichweite. Bei Fahrzeugen mit Lasttrageplattform kann durch das geringe Gewicht des Brennstoffzellensystems zudem die Nutzlast erhöht werden.

In einer vorteilhaften Ausbildung der Erfindung ist ein austauschbarer Brennstoffspeicher vorgesehen. Durch einen schnellen Austausch des Speichers sind keine Nachtankvorgänge mit langer Stillstandszeit nötig. Zudem kann die Art und Kapazität des Speichers auf diese Weise einfach an die Betriebsanforderungen angepasst werden.

In einer weiteren vorteilhaften Ausgestaltung der Erfindung sind Brennstoffspeicher und Brennstoffzelleneinheit als gemeinsam austauschbare Vorrichtung ausgebildet. Dadurch ist ein schneller Wechsel des verwendeten Brennstoffs möglich, wobei eine optimale Abstimmung der Brennstoffzelle auf den Energiespeicher und den verwendeten Brennstoff gewährleistet ist.

Es ist zweckmäßig, wenn als Brennstoff Wasserstoff verwendet wird. Die Emissionen eines mit Wasserstoff betriebenen Brennstoffzellensystems bestehen im wesentlichen aus Wasserdampf, so dass beim Betrieb in Innenräumen keinerlei schädliche Emissionen entstehen.

Gleichermaßen ist es von besonderem Vorteil, wenn zum Betrieb der Brennstoffzelleneinheit ein bei Raumtemperatur flüssiger Brennstoff, insbesondere Mehanol, verwendet wird. Bei Raumtemperatur flüssige Brennstoffe sind einfach zu lagern und ermöglichen eine einfache Betankung des Fahrzeugs.

Dabei ist es von Vorteil, wenn die Brennstoffzelleneinheit als Direktbrennstoffzelle ausgebildet ist. Derartige Brennstoffzellen für den Einsatz von bei Raumtemperatur flüssigen Brennstoffen, wie beispielsweise Methanol, besitzen keinen Reformer zur Umwandlung des Brennstoffs und ermöglichen daher einen besonders einfachen Aufbau.

Es ist besonders vorteilhaft, wenn die Abwärme der Brennstoffzelleneinheit zur Klimatisierung der Fahrerkabine verwendet wird. Dadurch sind keine zusätzlichen Heizelemente erforderlich, die elektrischen Strom in Wärme umwandeln. Es wird ein niedriger Energieverbrauch und ein einfacher Aufbau erreicht.

Weitere Vorteile und Einzelheiten der Erfindung werden anhand des in der schematischen Figur dargestellten Ausführungsbeispiels näher erläutert. Diese zeigt einen erfindungsgemäßen Industrieschlepper 1. Ein Rahmen 2 trägt die wesentlichen Elemente des Fahrzeugs 1. Dies sind die lenkbare Vorderache 3, die Hinterachse 4 mit den nicht dargestellten elektrischen Antriebsmotoren, eine Anhängevorrichtung 5, eine Lasttrageplattform 6, sowie eine ebenfalls nicht dargestellte Vorrichtung zur Steuerung der elektrischen Funktionen, wie beispielsweise der Fahrantriebsmotoren. Die Bedienperson sitzt in einer Fahrerkabine 7 und steuert von dort das Fahrzeug 1. An der Anhängevorrichtung 5 können Wagen zum Transport von Lasten angehängt und so mit dem Fahrzeug 1 geschleppt werden. Zur Beförderung kleinerer Lasten ist die Lasttrageplattform 6 vorgesehen. In dem Raum zwischen den Achsen 3, 4 unterhalb der Lasttrageplattform 6 ist ein Brennstoffzellensystem 8 angebracht, das im Wesentlichen aus einer Brennstoffzelleneinheit 9, einem Brennstoffbehälter 10 und einer Steuerungselektronik 11 besteht. Bei Flurförderzeugen nach dem Stand der Technik ist in diesem Bereich eine Batterie angeordnet. Die einzelnen Komponenten des Brenntoffzellensystems 8 sind nach dem Stand der Technik für den jeweiligen Brennstoff ausgebildet; so kann beispielweise bei Wasserstoffbetrieb der Brennstoffbehälter 10 als Tieftemperatur-Drucktank oder als Metallhydridspeicher ausgeführt sein. Bei Betrieb mit bei Raumtemperatur flüssigen Brennstoffen, wie beispielsweise Methanol, kann der Brennstoffbehälter 10 relativ einfach ausgebildet sein. Dafür ist in diesem Fall bei Verwendung konventioneller Brennstoffzellen ein so genannter Reformer zur Zerlegung des Brennstoffes in in der Brennstoffzelle umsetzbare Moleküle erforderlich, der zusätzlichen Platz beansprucht. Der Einbauraum bei den relativ kompakten Industrieschleppern ist jedoch begrenzt. Durch den Einsatz so genannter Direktbrennstoffzellen, bei denen der Reformer zur Zerlegung des Brennstoffes nicht benötigt wird, können auch bei Einsatz von Methanol als Brennstoff kompakte Abmessungen erreicht werden.

Wasserstoff eignet sich insbesondere beim Dauereinsatz in Innenräumen, da dabei keine schädlichen Emissionen auftreten. Wird das Fahrzeug auch im Freien eingesetzt, so sind größere Fahrstrecken zu erwarten und dadurch ein häufigeres Nachtanken nötig. Dies erfordert bei Verwendung von Methanol, das bei Raumtemperatur flüssig ist, weniger aufwändige Vorrichtungen, beispielsweise bei Speicherbehältem und Anschlussleitungen, und ist einfacher durchzuführen als bei Wasserstoffbetrieb.

Das Brennstoffzellensystem 8 kann im vorliegenden Ausführungsbeispiel als komplette Einheit entnommen werden, wozu Aufnahmevorrichtungen 12 für die Zinken eines Gabelstaplers oder Hubwagens vorgesehen sind. Ist der Brennstoffspeicher 10 leer, so kann dieser entweder über eine Betankungsvorrichtung 13 wieder befüllt oder die komplette Einheit 8 ausgetauscht werden. Auf diese Weise ist es beispielweise auch möglich, ein auf Wasserstoffversorgung basierendes System 8 einfach gegen eines, das mit Methanol betrieben wird, auszutauschen. Es sind aber auch Ausführungsformen denkbar, bei denen sämtliche Komponenten fest im Fahrzeug 1 installiert sind oder bei denen nur der Brennstoffspeicher 10 austauschbar ist.

Für die Steuerungs- und Überwachungsfunktionen des Brennstoffzellensystems 8, die von der Bedienperson in der Fahrerkabine 7 wahrgenommen werden, sind entsprechende, hier nicht dargestellte Anschlüsse und Leitungen vorhanden. Zudem sind ebenfalls nicht dargestellte Mittel vorhanden, um die Abwärme des Brennstoffzellensystems 8 in das hier nicht dargestellte Heizungs- und Klimatisierungssystem der Fahrerkabine 7 leiten zu können und diese so beim Einsatz in kalter Umgebung zur Beheizung oder in warmer Umgebung zur Kühlung der Kabine 7 nach dem Stand der Technik für Klimatisierungssysteme zu verwenden. Dies ermöglicht gegenüber einem batteriebetriebenen Fahrzeug weitere Energieeinsparung, da bei batteriebetriebenen Fahrzeugen die Heiz- oder Kühlleistung über elektrische Vorrichtungen erbracht werden muss, die zusätzliche elektrische Energie benötigen und so für eine schnellere Entladung der Batterie sorgen.

Die Aufnahmevorrichtungen für das Brennstoffzellensystem 8 im Rahmen 2 sind sinnvollerweise so ausgebildet, dass auch der Einsatz herkömmlicher Batterien anstelle des Brennstoffzellensystems 8 möglich ist. Dadurch wird beim Einsatz des Fahrzeugs 1 in einer vorhandenen Flotte von Fahrzeugen mit Batteriebetrieb ein freizügiger Austausch der Energiequellen möglich.

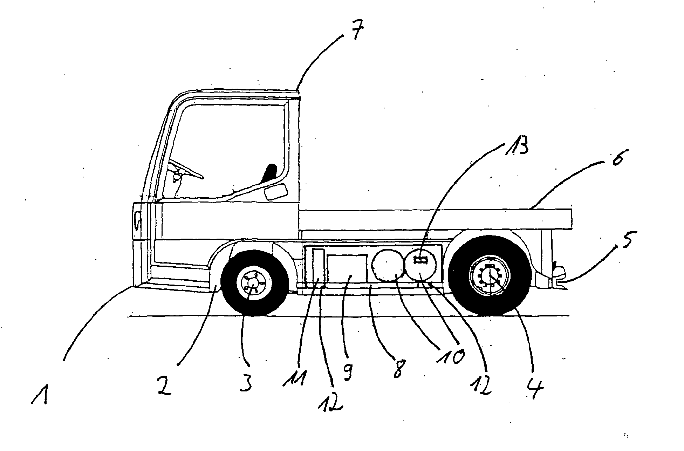

## Patentansprüche

1. Industrieschlepper (1) mit elektrischem Fahrantrieb **dadurch gekennzeichnet, dass** zur Energieversorgung des elektrischen Fahrantriebes mindestens eine Brennstoffzelleneinheit (9) verwendet wird.

2. Industrieschlepper (1) mit elektrischem Fahrantrieb nach Anspruch 1, **dadurch gekennzeichnet, dass** ein austauschbarer Brennstoffspeicher (10) vorgesehen ist.

3. Industrieschlepper (1) mit elektrischem Fahrantrieb nach Anspruch 1 oder 2, **dadurch gekennzeichnet, dass** Brennstoffspeicher (10) und Brennstoffzelleneinheit (9) als gemeinsam austauschbare Vorrichtung (8) ausgebildet sind.

4. Industrieschlepper (1) mit elektrischem Fahrantrieb nach einem der Ansprüche 1 bis 3, **dadurch gekennzeichnet, dass** als Brennstoff Wasserstoff verwendet wird.

5. Industrieschlepper (1) mit elektrischem Fahrantrieb nach einem der Ansprüche 1 bis 3, **dadurch gekennzeichnet, dass** zum Betrieb der Brennstoffzelleneinheit (9) ein bei Raumtemperatur flüssiger Brennstoff, insbesondere Methanol, verwendet wird.

6. Industrieschlepper (1) mit elektrischem Fahrantrieb nach Anspruch 5, **dadurch gekennzeichnet, dass** die Brennstoffzelleneinheit (9) als Direktbrennstoffzelle ausgebildet ist.

7. Industrieschlepper (1) mit elektrischem Fahrantrieb nach einem der Ansprüche 1 bis 5, **dadurch gekennzeichnet, dass** die Abwärme der Brennstoffzelleneinheit (9) zur Klimatisierung der Fahrerkabine verwendet wird.
